# EUROPÄISCHE PATENTSCHRIFT

(11) **EP 2 965 408 B1**
(45) Veröffentlichungstag und Bekanntmachung des Hinweises auf die Patenterteilung: **26.04.2017**
(21) Anmeldenummer: 13774106.2
(22) Anmeldetag: 27.09.2013
(51) Int. Cl.: H02K 15/02, H02K 17/16, H02K 1/24, H02K 19/14

(54) **RELUKTANZROTOR MIT ANLAUFHILFE**
RELUCTANCE ROTOR WITH RUNUP AID
ROTOR À RÉLUCTANCE AVEC ASSISTANCE DE DÉMARRAGE

(30) Priorität: 12.04.2013 EP 13163492; 15.04.2013 EP 13163688
(43) Veröffentlichungstag der Anmeldung: 13.01.2016
(73) Patentinhaber: Siemens Aktiengesellschaft, 80333 München (DE)
(72) Erfinder: BÜTTNER, Klaus, 97618 Hollstadt (DE); CERNY, Marco, 97720 Nüdlingen (DE); FISCHER, Ralf, 90419 Nürnberg (DE); WARMUTH, Matthias, 97618 Windshausen (DE)
(86) Internationale Anmeldenummer: PCT/EP2013/070274
(87) Internationale Veröffentlichungsnummer: WO 2014/166555

(56) Entgegenhaltungen:
- DE-B- 1 282 161
- US-A- 2 975 310
- US-A1- 2003 090 170

## Beschreibung

Die Erfindung betrifft einen Rotor für einen Reluktanzmotor. Der Rotor weist ein Blechpaket auf, dessen einzelne Blechschichten streifenförmige Flussleitabschnitte zum Leiten eines magnetischen Flusses zwischen den d-Achsen des Rotors aufweist. Die Flussleitabschnitte verlaufen hierzu quer zu jeweiligen q-Achsen des Rotors und sind untereinander durch nicht magnetische Flusssperrbereiche getrennt.

Ein Rotor dieser Art ist beispielsweise aus der US 5818140 A bekannt. Danach bilden die Flusssperrbereiche Hohlräume in dem Rotor.

Die Erfindung bildet den Rotor weiter, der in der europäischen Patentanmeldung mit der Anmeldenummer EP 13 163 492.5 vom 12. April 2013 beschrieben ist. Danach ist in den Flusssperrbereichen ein Stützelement angeordnet, um den Rotor gegen Zentrifugalkräfte zu stützen, da das Vorsehen der Luftsperrbereiche in dem Blechpaket dessen mechanische Steifigkeit verringert. Des Weiteren kann durch die Erfindung auch der Rotor weitergebildet werden, der in der europäischen Patentanmeldung mit der Anmeldenummer EP 13 163 688.8 vom 15. April 2013 beschrieben ist.

Elektrische Maschinen mit Reluktanzrotor, also Reluktanzmotoren, werden im Synchronbetrieb betrieben und benötigen deshalb für den Anlauf, also das Anfahren insbesondere aus dem Stillstand, einen Wechselrichter, der in der Regel Bestandteil eines Umrichters ist. Deshalb sind Reluktanzmotoren nicht ohne weitere Maßnahmen für einen Netzbetrieb geeignet, also einen netzgeführten Betrieb ohne steuerbaren Wechselrichter. Ein Anlauf am Netz mit vorgegebener konstanter Wechselfrequenz ist nicht möglich.

Für Anwendungen, die einen Netzbetrieb erfordern, wird in der Regel anstelle eines Reluktanzmotors ein Asynchronmotor verwendet. Asynchronmotoren weisen aber den Nachteil auf, dass ihr Wirkungsgrad in der Regel geringer als bei einem synchron betriebenen Reluktanzmotor ist, da der stets vorhandene Schlupf zwischen Statordrehfeld und Rotor elektrische Verluste im Rotor verursacht.

In dem Dokument US 2 975 310 A ist ein Reluktanzrotor beschrieben, dessen Flusssperren mit Aluminium ausgegossen sind. An Paketenden eines Blechpakets des Rotors können Kurzschlussringe angegossen sein, sodass sich durch die ausgegossenen Flusssperren und die Kurzschlussringe insgesamt ein Käfigläufer ergibt.

In dem Dokument US 2003/0090170 A1 ist ein Reluktanzrotor beschrieben, dessen Flusssperren mit Aluminium ausgegossen sind. An den beiden Enden des Blechpakets sind Endringe aus Aluminium ausgebildet. Zwischen den Endringen ist das Blechpaket durchgängig durch Rotorbleche gebildet.

In dem Dokument DE 12 82 161 B ist ein Reluktanzmotor beschrieben, dessen Rotor einen aktiven Läuferkern mit Läuferstäben für einen Läuferkäfig aufweist. Die Läufer-stäbe aus dem aktiven Kern sind verlängert, indem eine magnetisch getrennte axiale Verlängerung des Läufers an den Enden des Läuferkerns angebracht ist und Wicklungsstäbe in den axialen Verlängerungen in Reihe mit den Läuferstäben des aktiven Läuferkerns geschaltet sind. Die so verlängerten Läuferstäbe sind dann durch Kurzschlussringe an den äußeren Enden der Reihenschaltung angeordnet.

Der Erfindung liegt die Aufgabe zugrunde, den eingangs beschriebenen Reluktanzrotor mit einer Anlaufhilfe auszustatten.

Die Aufgabe wird durch den Gegenstand des unabhängigen Anspruchs gelöst. Vorteilhafte Weiterbildungen der Erfindung sind durch die Merkmale der Unteransprüche gegeben. Durch die Erfindung ist ein Rotor bereitgestellt, welcher für einen Reluktanzmotor verwendet werden kann. Der Rotor weist in der beschriebenen Weise ein Blechpaket mit Schichten auf, von denen jede mehrere, jeweils durch ein magnetisch leitfähiges Rotorblech gebildete Flussleitabschnitte aufweist, die sich jeweils quer zu einer q-Achse erstrecken. Insbesondere sind die Flussleitabschnitte streifenförmige Rotorbleche, die sich in ihrer Längserstreckung quer zur q-Achse erstrecken. Die Rotorbleche weisen für das Leiten des magnetischen Flusses bevorzugt ferromagnetisches Material, insbesondere ein weichmagnetische Material auf, z.B. Eisen.

Die Flussleitabschnitte sind in bekannter Weise voneinander durch unmagnetische Flusssperrbereiche getrennt. Die Flusssperrbereiche sind dabei unmagnetisch, d. h. insbesondere, dass sie kein ferromagnetisches Material aufweisen. Bei dem erfindungsgemäßen Rotor ist in mehreren oder allen Flusssperrbereichen der Schichten nun aber ein elektrisch leitfähiges, nicht-ferromagnetisches Füllmaterial angeordnet. Unter elektrisch leitfähig ist hier zu verstehen, dass das Füllmaterial einen hohen elektrischen Leitwert aufweist, insbesondere einen Leitwert von größer als 105 S/m (Siemens pro Meter), bevorzugt größer als 106 S/m. Ein nicht-ferromagnetisches Material ist im Zusammenhang mit der Erfindung z.B. ein gänzlich unmagnetisches Material, z.B. eine Keramik mit Kohlenstoffnanoröhren oder ein Polymer mit Kohlen-stoffnanoröhren, oder ein paramagnetisches oder diamagnetisches Material. Dieses Füllmaterial erstreckt sich über mehrere Schichten hinweg, d.h. durch das Füllmaterial sind auch die Flusssperrbereiche benachbarter Schichten elektrisch miteinander verbunden. Mit anderen Worten ist durch das Füllmaterial in den Flusssperrbereichen eine sich parallel oder windschief zur Rotationsachse des Rotors axial erstreckende Struktur gebildet, die in dem Blechpaket Käfigstäbe eines Läuferkäfigs des Rotors bildet. Die windschiefe Anordnung bewirkt eine Rippelglättung im Momentenverlauf.

Durch den erfindungsgemäßen Rotor ergibt sich der Vorteil, dass die Flusssperrbereiche mit dem darin angeordneten Füllmaterial Käfigstäbe eines Läuferkäfigs bilden und so in dem erfindungsgemäßen Reluktanzrotor, zusammen mit Kurzschlussringen, ein Rotorkäfig für einen asynchronen Anlauf des Rotors integriert sein kann. Der Rotor läuft aber nach dem Anlauf oder Hochlauf in den synchronen Betrieb dann rein nach dem Prinzip des Reluktanz-Synchronmotors mit wesentlich höherem Wirkungsgrad bzw. höherer Leistungsdichte als ein vergleichbarer Asynchronmotor, da im Läufer nahezu keine Verluste entstehen. Denn bei synchronem Drehbetrieb, wenn der Rotor mit der Drehfrequenz des magnetischen Statordrehfelds rotiert, gibt es keine Relativbewegung des Statorfelds zum Rotorfeld, respektive keine Induktion in den Rotorstäben des Läuferkäfigs.

Gemäß der Erfindung ist an gegenüberliegenden axialen Paketenden des Blechpakets jeweils eine elektrisch leitfähige und nicht-ferromagnetische Scheibe angeordnet, durch welche die Käfigstäbe elektrisch verbunden sind und hierdurch die Scheiben den Kurzschlussring des Käfigläu-fers bilden. Die Scheiben können in vorteilhafter Weise durch ein Druckgussverfahren oder ein Spritzgussverfahren mit geringem Aufwand bereitgestellt werden. Die Scheiben können aus dem Füllmaterial gebildet sein.

Gemäß der Erfindung ist auch innerhalb des Blechpakets zumindest eine Zwischenscheibe vorgesehen, die ebenfalls aus dem Füllmaterial oder dem Material von an den beiden Paketenden befindlichen Scheiben gebildet sein kann. Die Zwischenscheibe ist aber zwischen zwei der Schichten des Blechpakets angeordnet. Hierdurch ergibt sich der Vorteil, dass die mechanische Steifigkeit des Rotors vergrößert und somit eine höhere Drehzahl des Rotors ermöglicht ist.

Durch die Wahl des Füllmaterials ist auch die Möglichkeit zur Optimierung des Anlaufverhaltens des Rotors unabhängig von seinem synchronen Drehverhalten möglich. Das Füllma-terial ist bevorzugt derart steif, dass es den Rotor gegen Fliehkräfte stabilisiert, sodass der Rotor für einen Betrieb bei einer Drehzahl von mehr als 3000 U/min (Umdrehungen pro Minute), insbesondere mehr als 7000 U/min, ausgelegt ist.

Bevorzugt umfasst das Füllmaterial ein Metall und/oder eine Metalllegierung. Hierbei können unterschiedliche Bereiche vorgesehen sein, in denen jeweils ein anderes Füllmaterial angeordnet sein kann, um beispielsweise den elektrischen Widerstand des Läuferkäfigs nach dem Prinzip der Stromverdrängung bei unterschiedlichen Drehzahlen einzustellen. Gemäß einer Ausführungsform der Erfindung umfasst das Füllmaterial in zumindest einem Bereich jeweils zumindest eines der folgenden Materialien: Kupfer, Aluminium, Magnesium, eine Legierung, hierbei bevorzugt eine Aluminiumlegierung, insbesondere Silumin.

Eine weitere Möglichkeit der Anpassung des Anlaufverhaltens besteht gemäß einer Ausführungsform darin, durch das Füllmaterial die Flusssperrbereiche nur teilweise ausgefüllt sind. Selbstverständlich können die Flusssperrbereiche auch vollständig mit dem Füllmaterial ausgefüllt sein. Es sind auch Ausführungsformen der Erfindung vorgesehen, bei denen nicht alle Flusssperrbereichen das Füllmaterial aufweisen. Es kann also vorgesehen sein, dass ein Flusssperrbereich teilweise oder ganz mit einem elektrisch isolierenden Material oder Luft ausgefüllt ist. Als elektrisch isolierendes Material kann beispielsweise ein Polymer oder eine Keramik vorgesehen sein.

Gemäß einer Ausführungsform der Erfindung ist aber vorgesehen, dass die Scheiben aus einem Material gefertigt sind, das einen geringeren elektrischen Leitwert als das elektrisch leitende Füllmaterial in den Flusssperrbereichen aufweist. Hierdurch ergibt sich der Vorteil, dass durch eine Wahl des Materials der Scheiben der elektrische Widerstand des Läuferkäfigs festgelegt werden kann, um ein Anfahrmoment des Rotors einzustellen.

Eine weitere, mit geringem Aufwand zu realisierende Möglichkeit des Einstellens des elektrischen Widerstands des Läuferkäfigs ergibt sich gemäß einer Ausführungsform, bei welcher ein jeweiliger effektiver Leitungsquerschnitt der Scheiben zwischen zwei Käfigstäben derart gering ist, dass die Scheiben in dem Leitungsquerschnitt jeweils einen größeren elektrischen Widerstand aufweisen als die Käfigstäbe. Beispielsweise kann eine Scheibendicke in axialer Richtung bemessen derart gering sein, dass der Strompfad in einem Übergang von einem Käfigstab zum nächsten in der Scheibe einen größeren elektrischen Widerstand aufweist als in den Käfigstäben. Die Scheiben können auch als Ring ausgestaltet sein, also mit einer Aussparung, wodurch ebenfalls der Leitungsquerschnitt festgelegt werden kann.

Das Füllmaterial und die Scheiben an den Blechpaketenden sind bevorzugt durch das Füllmaterial zu einem festen Verbund vergossen, was einen besonders einfachen Einbau des Rotors in einer elektrischen Maschine ermöglicht.

In diesem Zusammenhang ist auch ein Verfahren zum Herstellen einer Ausführungsform des erfindungsgemäßen Rotors möglich. Gemäß dem Verfahren wird zum Bilden jeder Schicht des Blechpakets jeweils ein magnetisch leitfähiges Blech bereitgestellt, welches die Flussleitabschnitte der Schicht aufweist und bei welchem als die Flusssperrbereiche Aussparungen vorgesehen sind, die beispielsweise Ausstanzungen des Blechs sein können. Die Bleche werden zu dem Blechpaket gestapelt oder aufgefädelt. Nach dem Auffädeln wird dann das Blechpaket mit dem elektrisch leitfähigen Füllmaterial vergossen. Hierbei kann ein Druckguss-Verfahren oder Spritzguss-Verfahren besonders vorteilhaft verwendet werden.

Es wird hier zwischen den Blechen zum Bilden jeder Schicht einerseits und den die Flussleitabschnitte bildenden Rotorblechen unterschieden. Jedes Blech kann ein oder mehrere der Rotorbleche aufweisen. Während des Herstellens des Rotors müssen die einzelnen streifenförmigen Flussleitabschnitte nach Möglichkeit miteinander verbunden sein, um den Herstellungsschritt zu vereinfachen. Hierzu können die Flussleitabschnitte z.B. durch einen Außenring miteinander verbunden sein. Nach dem Auffädeln der Bleche wird dann gemäß einer Ausführungsform des Verfahrens dieser Außenring jedes magnetisch leitfähigen Blechs durch ein spanendes Verfahren entfernt, und hierdurch jedes der Bleche je in mehrere voneinander getrennte Rotorbleche aufgetrennt.

Durch die Erfindung ist schließlich auch eine elektrische Antriebsanordnung bereitgestellt, die eine elektrische Maschine mit einem Rotor gemäß einer Ausführungsform der Erfindung aufweist. Die elektrische Maschine ist dabei für einen Betrieb als Synchron-Reluktanzmotor oder als Asynchronmotor ausgelegt. Vorteil der elektrischen Maschine ist, dass in einem asynchronen Betrieb angefahren werden kann und bei Synchronbetrieb mit hohem Wirkungsgrad betrieben werden kann. Im Falle eines Asynchronmotors besteht der Vorteil darin, dass bei geringer Last der Rotor auch in Tritt mit dem StatorDrehfeld fallen kann und sich hierdurch ein synchroner Reluktanzbetrieb ergibt, durch welchen die elektrischen Verluste im Rotor minimiert sind.

Im einfachsten Fall ist die elektrische Antriebsanordnung einfach die einzelne elektrische Maschine selbst. Die erfindungsgemäße Antriebsanordnung kann aber auch mehrere elektrische Maschinen umfassen, also zu der beschriebenen elektrischen Maschine kann zumindest eine weitere elektrische Maschine mit jeweils einem Rotor bereitgestellt sein, welcher eine Ausführungsform des erfindungsgemäßen Rotors darstellt. Alle Maschinen sind bei dieser Ausführungsform an einem gemeinsamen Wechselrichter angeschlossen. Bei einem solchen Gruppenantrieb besteht in der Regel das Problem, mit dem gemeinsamen Wechselrichter einen Synchronbetrieb bei allen elektrischen Maschinen sicherzustellen. Bei der erfindungsgemäßen Antriebsanordnung ist dieses Problem nicht gegeben, da ein aus dem Tritt fallender Rotor sich selbständig mittels seines Läuferkäfigs wieder auf die synchrone Drehzahl beschleunigt.

Bei der Antriebsanordnung kann auch vorgesehen sein, dass eine der elektrischen Maschinen einen Rotor aufweist, der nicht gemäß der Erfindung ausgestaltet ist. Der Wechselrichter kann dann für einen synchronen Betrieb für diese eine elektrische Maschine ausgestaltet sein. Alle übrigen elektrischen Maschinen sind dann durch ihre Fähigkeit, auch asynchron anzulaufen, ebenfalls von diesem Wechselrichter betreibbar.

Im Folgenden ist ein Ausführungsbeispiel der Erfindung beschrieben. Hierzu zeigt:
- FIG 1: eine schematische Darstellung eines Querschnitts einer Ausführungsform der erfindungsgemäßen Antriebsanordnung,
- FIG 2: eine schematische Darstellung einer perspektivischen Ansicht eines Rotors der elektrischen Maschine von FIG 1,
- FIG 3: eine schematische Darstellung einer perspektivischen Sicht auf einen Teilschnitt eines Läuferkäfigs des Rotors von FIG 2,
- FIG 4: eine schematische Darstellung einer Schicht eines Blechpakets des Läufers von FIG 2 und
- FIG 5: eine schematische Darstellung einer Schicht eines Blechpakets einer weiteren Ausführungsform des erfindungsgemäßen Rotors.

Bei dem im Folgenden erläuterten Ausführungsbeispiel handelt es sich um eine bevorzugte Ausführungsform der Erfindung.

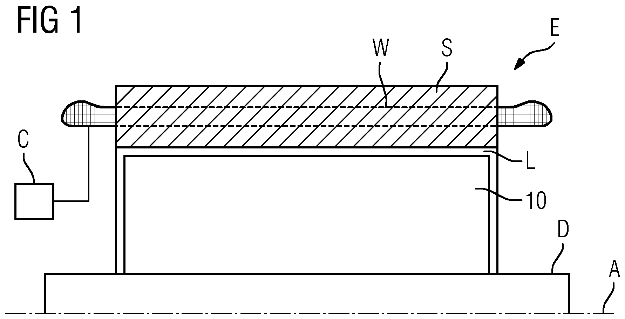

In FIG 1 ist eine elektrische Maschine E gezeigt, bei der es sich z.B. um einen Synchron-Reluktanzmotor oder einen Asynchronmotor handeln kann. In FIG 1 stellt die Rotationsachse A auch eine Symmetrieachse der Darstellung dar. Die elektrische Maschine E umfasst einen Stator S, in welchem Wicklungen W elektrischer Spulen angeordnet sind, wobei in FIG 1 nur eine der Wicklungen W dargestellt ist. Die Wicklungen W werden durch ein Drehstromquelle C abwechselnd bestromt, wodurch im Inneren des Stators S ein magnetisches Drehfeld in einem Luftspalt L der elektrischen Maschine E entsteht. Die Drehstromquelle C kann beispielsweise ein Wechselrichter sein oder ein festfrequentes elektrisches Versorgungsnetz.

Im Inneren des Stators S befindet sich ein Rotor 10, der drehfest mit einer Welle D verbunden ist. Die Welle D ist um die Rotationsachse A drehbar in dem Stator S gelagert. Der Rotor 10 ist eine Ausführungsform des erfindungsgemäßen Rotors.

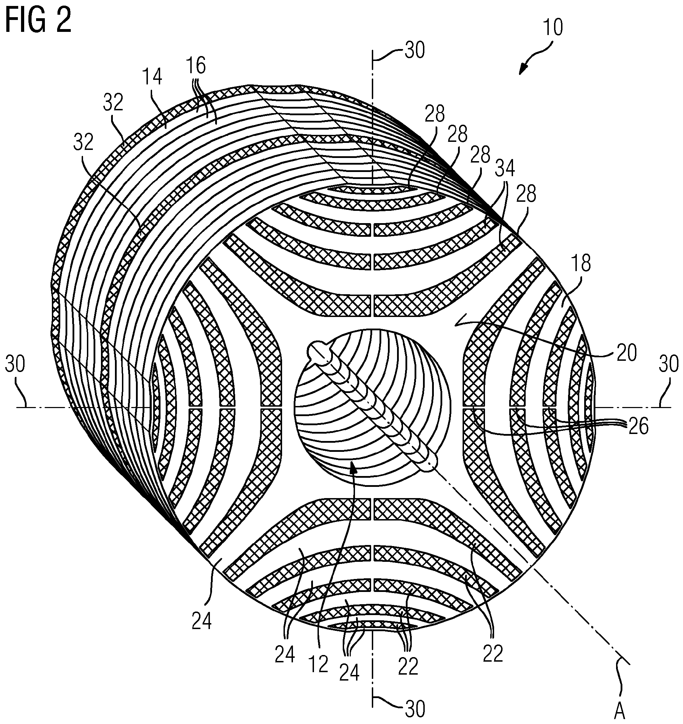

In FIG 2 ist der Rotor 10 allein dargestellt.

Durch eine Durchgangsöffnung 12 des Rotors 10 ist die (in FIG 2 nicht mehr dargestellte) Welle D gesteckt. Ein Durchmesser des Rotors 10 in bezüglich der Rotationsachse A radialer Richtung kann mehr als 20 cm betragen. Eine Länge des Rotors 10 in axialer Richtung kann mehr als 30 cm betragen.

Der Rotor 10 weist als magnetisch aktiven Teil ein Blechpaket 14 auf, das aus mehreren Schichten 16 gebildet ist, die jeweils ferromagnetisches, insbesondere weichmagnetisches, Material aufweisen. Von den magnetischen Schichten 16 sind in der FIG 2 der Übersichtlichkeit halber nur einige mit einem Bezugszeichen versehen. Zwischen den Schichten befindet sich jeweils in an sich bekannter Weise eine elektrisch isolierende Schicht, um Wirbelströme in dem Blechpaket 14 zu blockieren. Jede Schicht 16 ist in dem in FIG 2 gezeigten Beispiel jeweils durch ein Rotorblech 18 gebildet. In der FIG 2 ist nur das Rotorblech 18, welches sich an einer Stirnseite 20 in axialer Richtung entlang der Achse A an einem vorderen Ende des Blechpakets befindet, mit einem Bezugszeichen versehen. Das Rotorblech 18 (und entsprechend auch die übrigen Rotorbleche der übrigen Schichten 16) weist Aussparungen 22 auf, die Sperren für einen magnetischen Fluss bilden, also Flusssperrbereiche. Die Aussparungen 22 können beispielsweise durch Ausstanzen der entsprechenden Formen aus Rotorblech 18 gebildet sein.

Von dem Rotorblech 18 sind somit nur Flussleitabschnitte 24 und Stege 26 zum mechanischen Verbinden der Flussleitabschnitte 24 sowie ein Außenring 28 zum mechanischen Verbinden der Flussleitabschnitte 24 vorhanden. Die Rotorbleche der Schichten 16 können alle die gleiche Form aufweisen. Mittels der Flussleitabschnitte 24 wird in dem Reluktanzmotor ein magnetischer Fluss quer zu q-Achsen 30 des Rotors 10 entlang einer magnetischen Vorzugsrichtung ein magnetischer Fluss, der durch elektrische Spulen des Stators erzeugt wird, geleitet.

Die Rotorbleche können in der Weise fluchtend in dem Blechpaket 14 axial hintereinander angeordnet sein, dass die Aussparungen 22 und entsprechend auch die Flussleitabschnitte 24 axial fluchten. Die Aussparungen 22 aller hintereinander angeordneten Rotorbleche 18 bilden insgesamt Schächte oder Räume in dem Blechpaket 14, in denen sich nicht-ferromagnetisches Material befinden kann.

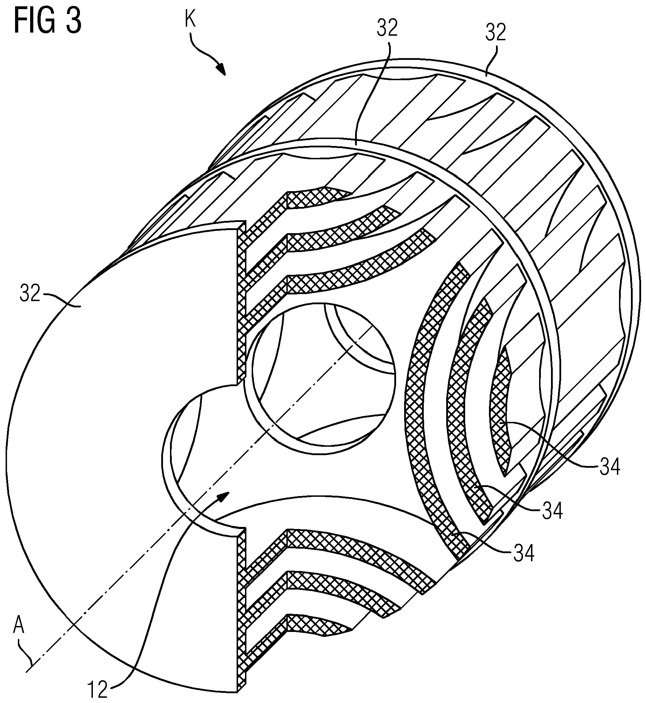

In den Rotor 10 ist ein Läuferkäfig K integriert, der es ermöglicht, den Rotor 10 auch asynchron zum magnetischen Drehfeld des Stators S, d.h. mit einem Schlupf, anzutreiben. In FIG 3 ist der Läuferkäfig K ohne die darin eingebetteten magnetischen Flussleitabschnitte 24 gezeigt. Der Läuferkäfig kann durch Ausfüllen der Flusssperren, d.h. der durch die Aussparungen 22 gebildeten Schächte in dem Blechpaket 14, mit einem nicht-ferromagnetischen, aber elektrisch leitfähigen Füllmaterial hergestellt worden sein. Hierdurch sind in den Aussparungen 22 Käfigstäbe 34 aus dem nicht-ferromagnetischen, elektrisch leitenden Füllmaterial ausgebildet. Um die Käfigstäbe 34 elektrisch kurzzuschließen, sind die in den Aussparungen 22 befindlichen Käfigstäbe 34 durch voll ausgegossene Teilbereiche in Form von elektrisch leitfähigen, zylindrischen Scheiben 32 elektrisch verbunden. Mit "voll ausgegossen" ist hierbei gemeint, dass natürlich auch in den Scheiben 32 die Durchgangsöffnung 12 für die Welle vorgesehen ist. Die Scheiben 32 bilden Kurzschlussringe des Läuferkäfigs K.

Zwei der Scheiben 32 sind an den beiden Stirnseiten, d.h. der Stirnseite 20 und der axial gegenüberliegenden Seite des Blechpakets 14, vorgesehen. In FIG 2 ist die vordere Scheibe 32, die sich an der Stirnseite 20 befindet, nicht dargestellt, um die Struktur des Rotorblechs 18 darstellen zu können. Es kann auch vorgesehen sein, dass nur die axial außen an den Blechpaketenden liegenden Scheiben 32 elektrischen leitend sind und eine oder mehrere Zwischenscheiben im Blechpaket aus einem elektrisch isolierenden Material sind.

Die Vergussmasse aus dem elektrisch leitfähige Füllmaterial kann beispielsweise mittels eines Spritzguss- oder Druckgussverfahrens nach dem Auffädeln, d.h. den Aneinanderreihen der Rotorbleche 18, in die Aussparungen 22 und in den Bereich der Scheiben 32 eingebracht worden sein. Um die Dicke der Scheiben 32 und deren Position festzulegen, kann das Rotorblechpaket 14 beim Auffädeln durch Distanzstücke, beispielsweise Ringe oder Klötze, auf Abstand gehalten werden, so dass sich beim Vergießen die zylindrischen Scheiben 32 aus Vergussmasse ergeben.

Durch den mittels Verguss der Aussparungen 22 gebildeten Rotorkäfig oder Läuferkäfig K ergibt sich eine Verknüpfung des durch die Flussleitabschnitte 24 gebildeten Reluktanzeffekts mit dem Kurzschlusskäfig oder Läuferkäfig K entsprechend einem Asynchronmotor. Dadurch ist ein asynchroner Anlauf am elektrischen Versorgungsnetz sogar ohne Umrichter möglich. Hierbei dreht sich zunächst der Läufer oder Rotor 10 asynchron zum Ständerdrehfeld. Jedoch ist es möglich, durch entsprechende Motorauslegung, d. h. Einstellen der elektrischen Widerstände der Scheiben 32 und der Käfigstäbe 34, das In-Trittfallvermögen so zu gestalten, dass der Rotor 10 in die Synchrondrehzahl des Ständerdrehfelds hineinfällt.

Die Flusssperren können, wie gezeigt, voll mit dem elektrisch leitenden Material befüllt sein. Es kann aber auch eine teilweise Befüllung vorgesehen sein. Als das elektrisch leitende Material kann ein einziges Material oder es können auch mehrere Materialien mit unterschiedlichen Eigenschaften in den unterschiedlichen Bereichen der Flusssperren, d. h. den Aussparungen 22, zum Einsatz kommen. Mögliche, vorzugsweise zu verwendende Materialien sind: Kupfer, Aluminium, Silumin, Magnesium.

Um die Motoreigenschaften der elektrischen Eigenschaften der Maschine E zu beeinflussen, kann auch unterschiedliches Material in den Flusssperren befindlichen Käfigstäbe 34 einerseits und für die Kurzschlussringe, d. h. die Scheiben 32 andererseits verwendet werden. Ein hoher elektrischer Leitwert des Materials in den Flusssperren, d. h. der Käfigstäbe 34, bewirkt einen geringeren Schlupf und somit eine Drehzahl, die der Synchrondrehzahl sehr naheliegt. Will man zusätzlich auch ein hohes Drehmoment erzielen, so kann für den Kurzschlussring ein Material mit geringerem elektrischen Leitwert verwendet werden. Die Steigerung des Drehmoments ist auch durch Verringerung des Kurzschlussringquerschnitts möglich, da dieser nur für den Anlauf benötigt wird.

Aus diesen beiden Parametern (elektrische Leitfähigkeit und Kurzschlussringquerschnitt) kann die elektrische Maschine E bezüglich der maximalen Drehzahl im asynchronen Netzanlauf und des Drehmoments für den jeweiligen Einsatzfall der elektrischen Maschine optimiert ausgelegt werden.

Mit dem elektrischen Leitwert des Vergussmaterials kann z.B. das Anfahr- oder Anlaufhalten beeinflusst werden. Parameter, die mit der Vergussmasse eingestellt werden, sind zum Beispiel das Anlaufmoment, der Wirkungsgrad, das Hochlaufverhalten, das In-Trittfall-Verhalten und die Drehzahl bei asynchronem Netzlauf.

Beim Vergießen können auch die beiden Kurzschlussringe an den Blechpaketenden geformt werden, womit sich ein mechanisch fester Verbund des Blechpakets 14 ergibt. Das Blechpaket 14 kann als einzelnes Bauteil verwendet werden. Ein aufwendiger Fügeprozess der einzelnen Bleche auf die Welle W, zusammen mit den Endscheiben 32 zum Verspannen, kann vermieden werden, womit Herstellungskosten eingespart werden. Der Verguss verhindert zudem radiale und axiale Schwingungen der einzelnen Rotorbleche 14, da es sich um ein festes Gebilde handelt.

Ein weiterer Vorteil ergibt sich dadurch, dass mit nur einem Blechschnitt sowohl die Umrichter betriebene als auch die netzbetriebene Ausführung sowie unter Verwendung des Vergießens auch die rein netzbetriebene Ausführung erstellt werden kann.

Unter Nutzung des Rotorkäfigs oder Läuferkäfigs K in der Synchron-Reluktanz-Technik wird der Vorteil erzielt, dass ein hoher Wirkungsgrad bei gleichzeitiger Netzanlauffähigkeit realisiert wird. Damit kann auf einen Umrichter verzichtet werden. Durch den Verguss wird ein Rotorblechpaket als einstückiges Bauteil möglich, das die Montage eines Rotors begünstigt. Die Drehzahleignung kann durch Material mit hoher Zugfestigkeit und Materialien mit geeigneten Füllstoffen erhöht werden, beispielsweise Fasern.

Durch die Verwendung des erfindungsgemäßen Rotors können folgende Einsatzgebiete verbessert werden. Der Einsatz als Ersatz für einen reinen Asynchronmotor gemäß Stand der Technik ist möglich, wobei aber eine kompaktere Bauweise durch die höhere Leistungsdichte im Rotor 10 und dessen höheren Wirkungsgrad durch die Kombination aus asynchronem Betrieb und Reluktanz möglich ist. Der Einsatz als Ersatz für einen reinen Synchron-Reluktanzmotor gemäß Stand der Technik ist möglich, wobei ein ansynchrones Anlaufvermögen bereitgestellt ist und der Betrieb ohne Umrichter ermöglicht ist. Ein Einsatz in einem Gruppenantrieb ist möglich, bei welchem ein paralleler oder zeitgleicher Einsatz von mehreren Synchron-Reluktanzmotoren an nur einem Frequenzumrichter realisiert ist, wobei dieser Frequenzumrichter sehr einfach ausgestaltet sein kann, da er keine Rückkopplung mit der aktuellen Drehzahl der Motoren benötigt.

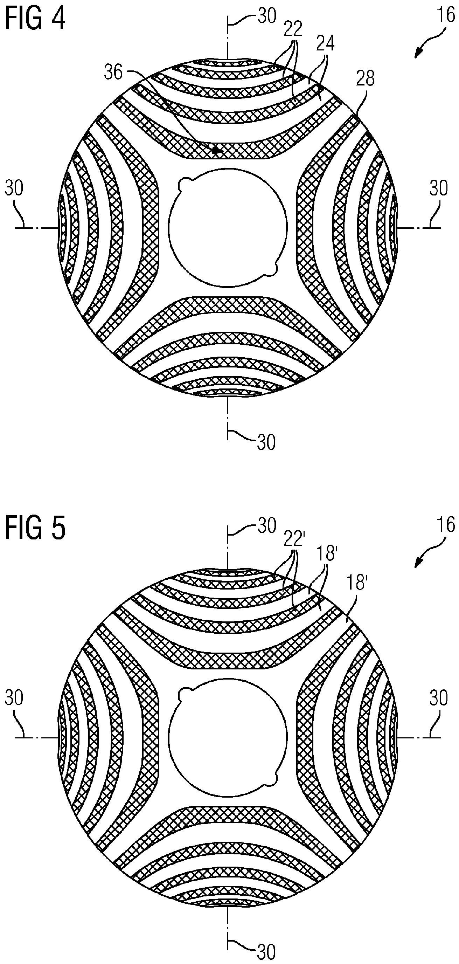

In FIG 4 und FIG 5 sind alternative Ausführungsformen von Rotoren gezeigt, bei welchen einzelne magnetische Schichten 16 anders ausgebildet sind. Diese Ausführungsformen weisen den Vorteil auf, dass die zum Ausbilden der Reluktanz nötige magnetische Flussführung in noch geringerem Maß als bei dem Rotor 10 durch Stützelemente, wie die Stege 26 und den Außenring 28 beeinflusst sind. Zur besseren Orientierung sind in FIG 4 und FIG 5 Elemente, welche Elementen in Bezug auf ihre Funktion entsprechen, die in FIG 1 oder FIG 2 gezeigt sind, mit den selben Bezugszeichen wie in FIG 1 bzw. FIG 2 versehen.

In FIG 4 ist eine magnetische Schicht 16 eines Rotors gezeigt, bei der mehrere Flussleitabschnitte 24 bereitgestellt sind, die ebenfalls durch die Aussparungen 22 voneinander getrennt sind, die aber ausschließlich durch einen äußeren Steg oder Ring 28 zusammengehalten sind. An den Stellen 36, an welchen bei den Rotorblechen 18 des Rotors 10 die Stege 26 vorhanden sind, ist bei der magnetischen Schicht 16 in FIG 4 ebenfalls ein unmagnetischer Bereich, wie er durch die Aussparungen 22 gebildet ist.

In FIG 5 ist eine magnetische Schicht eines Rotors gezeigt, bei welcher einzelne Flussleitabschnitte aus voneinander getrennten Rotorblechen 18' gebildet sind, zwischen denen sich jeweils unmagnetische Bereiche 22', also insbesondere Kunstharz befinden. Ein Rotor mit magnetischen Schichten 16, wie sie in FIG 5 gezeigt ist, kann beispielsweise aus einem Rotor mit einer magnetischen Schicht gebildet werden, wie sie in FIG 4 gezeigt ist. Indem ein Rotor aus FIG 4 durch ein spanendes Verfahren des Außenrings 28 abgetragen wird, erhält man einen Rotor mit einer magnetischen Schicht 16, wie sie in FIG 4 dargestellt ist.

Insgesamt ist durch die Erfindung ein Reluktanzrotor mit integriertem Anlaufkäfig bereitgestellt, der insbesondere in einem Synchronreluktanzmotor vorteilsbringend eingesetzt werden kann.

## Patentansprüche

1. Rotor (10) für einen Reluktanzmotor (E), wobei der Rotor (10) ein Blechpaket (14) mit Schichten (16) aufweist, von denen jede mehrere jeweils durch ein magnetisch leitfähiges Rotorblech (18) gebildete, sich quer zu einer jeweiligen q-Achse (30) erstreckende Flussleitabschnitte (24) aufweist, wobei die Flussleitabschnitte (24) voneinander durch unmagnetische Flusssperrbereiche (22) getrennt sind, wobei in mehreren oder allen Flusssperrbereichen (22) der Schichten (16) ein elektrisch leitfähiges und nicht-ferromagnetisches Füllmaterial angeordnet ist, durch das die Flusssperrbereiche (22) benachbarter Schichten elektrisch verbunden sind, so dass durch das Füllmaterial in den Flusssperrbereichen (22) sich axial parallel oder windschief zur Rotationsachse (A) erstreckende Käfigstäbe (34) eines Läuferkäfigs (K) des Rotors (10) gebildet sind, und wobei an die gegenüberliegenden axialen Paketenden (20) des Blechpakets (40) jeweils eine elektrisch leitfähige und nicht-ferromagnetische Scheibe (32) angeordnet ist, durch welche die Käfigstäbe (34) elektrisch verbunden sind und hierdurch die Scheiben (32) jeweils einen Kurzschlussring des Läuferkäfigs (K) bilden,
**dadurch gekennzeichnet, dass**
der Rotor (10) zumindest eine aus dem Füllmaterial gebildete Zwischenscheibe (32) aufweist, die zwischen den Schichten (16) angeordnet ist.

2. Rotor (10) nach Anspruch 1, wobei das Füllmaterial in zumindest einem Bereich jeweils zumindest eines der folgenden Materialen umfasst: Kupfer, Aluminium, Magnesium, eine Legierung, bevorzugt eine Aluminiumlegierung, insbesondere Silumin.

3. Rotor (10) nach einem der vorhergehenden Ansprüche, wobei durch das Füllmaterial die Flusssperrbereiche (22) nur teilweise ausgefüllt sind.

4. Rotor (10) nach einem der vorhergehenden Ansprüche, wobei die Scheiben (32) aus einem Material gefertigt sind, das einen geringeren elektrischen Leitwert als das Füllmaterial aufweist.

5. Rotor (10) nach einem der vorhergehenden Ansprüche, wobei ein jeweiliger effektiver Leitungsquerschnitt der Scheiben (32) zwischen zwei Käfigstäben (34) derart gering ist, dass die Scheiben (32) in dem Leitungsquerschnitt jeweils einen größeren elektrischen Widerstand aufweisen als jeder der Käfigstäbe (34).

6. Rotor (10) nach einem der vorhergehenden Ansprüche, wobei durch das Füllmaterial alle Rotorbleche der Flussleitabschnitte zu einem festen Verbund vergossen sind.

7. Elektrische Antriebsanordnung (E), die eine elektrische Maschine (E) mit einem Rotor (10) gemäß einem der vorhergehenden Ansprüche aufweist, wobei die elektrische Maschine (E) für einen Betrieb als Synchron-Reluktanzmotor oder als Asynchronmotor ausgelegt ist.

8. Antriebsanordnung nach Anspruch 7, wobei zumindest eine weitere elektrische Maschine bereitgestellt ist und alle Maschinen an einen gemeinsamen Wechselrichter angeschlossen sind, wobei alle Maschinen oder alle Maschinen bis auf eine Maschine jeweils einen Rotor gemäß einem der Ansprüche 1 bis 6 aufweisen.

## Claims

1. Rotor (10) for a reluctance motor (E), wherein the rotor (10) has a laminate stack (14) with layers (16), of which several taken together have in each case flux-conducting sections (24), formed by a magnetically conductive rotor plate (18), which extends transversely relative to the relevant q-axis (30), wherein the flux-conducting sections (24) are separated from each other by non-magnetic flux barrier regions (22), wherein in several or all of the flux barrier regions (22) of the layers (16) there is arranged an electrically conductive and non-ferromagnetic filler material, by which the flux barrier regions (22) of neighbouring layers are electrically connected, so that cage bars (34), of a rotor cage (K) of the rotor (10), which extend axially parallel to or skewed to the axis of rotation (A), are formed by the filler material in the flux barrier regions (22), and wherein, on each of the axially opposite ends (20) of the laminate stack (40), there is arranged an electrically conductive and non-ferromagnetic disk (32), by which the cage bars (34) are electrically connected and thereby the disks (32) form in each case a short-circuit ring of the rotor cage (K),
**characterised in that**
the rotor (10) has at least one intermediate disk (32) formed from the filler material, this being arranged between the layers (16).

2. Rotor (10) according to claim 1,
wherein the filler material in at least one region incorporates in each case at least one of the following materials: copper, aluminium, magnesium, an alloy, preferably an aluminium alloy, in particular silumin.

3. Rotor (10) according to one of the preceding claims, wherein the flux barrier regions (22) are only partially filled up with the filler material.

4. Rotor (10) according to one of the preceding claims, wherein the disks (32) are made of a material which has a lower electrical conductivity than the filler material.

5. Rotor (10) according to one of the preceding claims, wherein the effective conducting cross-section of the disks (32) between two cage bars (34) is in each case low enough that the conducting cross-section of the disks (32) has in each case a greater electrical resistance than any of the cage bars (34).

6. Rotor (10) according to one of the preceding claims, wherein all the rotor plates of the flux-conducting sections are bonded together by the filler material to form a rigid entity.

7. Electrical drive arrangement (E),
having an electrical machine (E) with a rotor (10) according to one of the preceding claims, wherein the electrical machine (E) is designed for operation as a synchronous reluctance motor or as an asynchronous motor.

8. Drive arrangement according to claim 7,
wherein at least one further electrical machine is provided and all the machines are connected to a common inverter, wherein all the machines or all the machines except for one machine each have a rotor according to one of claims 1 to 6.

## Revendications

1. Rotor ( 10 ) pour un moteur ( E ) à réluctance, le rotor ( 10 ) ayant un paquet ( 14 ) de tôles à couches ( 16 ), dont chacune a plusieurs segments ( 24 ) conducteurs de flux formés par une tôle ( 18 ) rotorique conductrice magnétiquement et s'étendant transversalement à un axe q ( 30 ) respectif, les segments ( 24 ) conducteurs de flux étant séparés les uns des autres par des parties ( 22 ) d'arrêt du flux amagnétiques, dans lequel, dans plusieurs ou dans toutes les parties ( 22 ) d'arrêt du flux des couches ( 16 ), est mis un matériau de remplissage conducteur de l'électricité et non ferromagnétique, par lequel les parties ( 22 ) d'arrêt du flux de couches voisines sont reliées électriquement, de manière à former, par le matériau de remplissage, dans les parties ( 22 ) d'arrêt du flux, des barreaux ( 34 ), s'étendant axialement, parallèlement ou sans se couper par rapport à l'axe ( A ) de rotation, d'une cage ( K ) d'écureuil du rotor ( 10 ) et dans lequel, aux extrémités ( 20 ) axiales opposées du paquet ( 40 ) de tôles, est disposé respectivement un disque ( 32 ) conducteur de l'électricité et non ferromagnétique, par lesquels les barreaux ( 34 ) de la cage sont reliés électriquement et ainsi les disques ( 32 ) forment respectivement un anneau de court-circuit de la cage ( K ) d'écureuil,
**caractérisé en ce que** le rotor ( 10 ) a au moins un disque ( 32 ) intermédiaire en le matériau de remplissage, disque ( 32 ) intermédiaire, qui est disposé entre les couches ( 16 ).

2. Rotor ( 10 ) suivant la revendication 1, dans lequel le matériau de remplissage comprend, dans au moins une partie, respectivement au moins l'un des matériaux suivants : cuivre, aluminium, magnésium, un alliage, de préférence un alliage d'aluminium, notamment du silumine.

3. Rotor ( 10 ) suivant l'une des revendications précédentes, dans lequel le matériau de remplissage ne remplit que partiellement les parties ( 22 ) d'arrêt du flux.

4. Rotor ( 10 ) suivant l'une des revendications précédentes, dans lequel les disques ( 32 ) sont en un matériau, qui a une conductance électrique plus petite que le matériau de remplissage.

5. Rotor ( 10 ) suivant l'une des revendications précédentes, dans lequel une section de ligne efficace des disques ( 32 ) entre deux barreaux ( 34 ) de la cage est petite, de manière à ce que les disques ( 32 ) aient, dans la section de ligne, une résistance électrique plus grande que celle des barreaux ( 34 ) de la cage.

6. Rotor ( 10 ) suivant l'une des revendications précédentes, dans lequel, par le matériau de remplissage, toutes les tôles rotoriques des segments conduisant le flux sont coulées en un composite solide.

7. Groupe ( E ) d'entraînement électrique, qui a une machine ( E ) électrique ayant un rotor ( 10 ) suivant l'une des revendications précédentes, la machine ( E ) électrique étant conçue pour un fonctionnement en moteur à réluctance synchrone ou en moteur asynchrone.

8. Groupe d'entraînement suivant la revendication 7, dans lequel il est mis à disposition au moins une autre machine électrique et toutes les machines sont raccordées à un onduleur commun, dans lequel toutes les machines, ou toutes les machines à l'exception d'une machine, ont chacune un rotor suivant l'une des revendications 1 à 6.
